# EUROPEAN PATENT SPECIFICATION

(11) **EP 2 947 213 B1**
(45) Date of publication and mention of the grant of the patent: **05.08.2020**
(21) Application number: 15167952.9
(22) Date of filing: 18.05.2015
(51) Int. Cl.: E03D 5/10, G01N 27/00, G01P 13/00, H01H 29/00

(54) **SANITARY APPLIANCE**
SANITÄRVORRICHTUNG
APPAREIL SANITAIRE

(30) Priority: 19.05.2014 EP 14001752
(43) Date of publication of application: 25.11.2015
(73) Proprietor: IPee N.V., 2610 Antwerpen (BE)
(72) Inventor: CLAES, Victor, 2600 Berchem (BE); GERAETS, Bart, 2650 Edegem (BE)
(74) Representative: Nollen, Maarten Dirk-Johan

(56) References cited:
- WO-A1-2011/089409
- DE-A1- 3 228 061
- GB-A- 1 350 246
- US-A1- 2006 005 312

## Description

### Field of the invention

The invention relates to a sanitary appliance comprising a receptacle provided with a flow surface and at least one outlet for a composition flowing on the flow surface on the receptacle, and a sensor for sensing liquid flow at a sensing location of the flow surface, which sensor is arranged in proximity to said sensing location;
The invention also relates to a method of identifying urine flow at a flow surface of a receptacle of a sanitary appliance.

### Background of the invention

Toilet facilities in locations visited by a large number of people, such as those in motorway service stations, have become a location for advertising. Sanitary appliances provided with one or more sensors may be used for identifying when such advertising should start and when it can be terminated.
One such sanitary appliance is known from BE-1016416A6. This prior art document proposes the use of a capacitive sensor and an electronic circuit for reading the capacitive sensor. The reading circuit transmits a signal to a processor to which also a display is coupled. The display can be used for games, for information on the urine flow and the provision of messages and advertisement.
The capacitive sensor is located on a rear side of the receptacle. Flow of urine in the receptacle at a location approximately opposite to the capacitive sensor may be detected as a change in capacitance.

Other applications of sensors used in sanitary appliances can be found e.g. in DE3228061 and WO2006/0005312.

It has turned out that the capacitive sensor does not meet the requirements. Constituent portions of the urine typically adhere to the flow surface of the receptacle, at least in some areas. This clearly depends on the frequency and the flow of a cleaning liquid, which typically is water. As a result thereof, the capacitance of the appliance in a non-use period (the background capacitance) increases. This complicates a distinction between flow of urine before the sensor (in the typically short period that this occurs) and the background capacitance. It has to be understood, in relation thereto, that the capacitance anyhow includes a component representative of the receptacle itself. The receptacle typically is a body of ceramic, dielectric material. The urine flow thus constitutes only an addition to the background capacitance.

### Summary of the invention

It is therefore an object of the present invention to provide a sanitary appliance with an improved sensor, and the use thereof.
It is a further object to provide an improved detection method.

According to a first aspect of the invention, a sanitary appliance is provided that comprises a receptacle provided with a flow surface and at least one outlet provided with a valve, a sensor for sensing liquid flow at a sensing location of the flow surface, which sensor is arranged in proximity to said sensing location. The sensor comprises a resonant circuit and is configured to modify a first voltage into a second voltage, which defines the sensor signal. A controller is present for receiving a sensor signal and controlling opening and/or closing the valve on the basis of the sensor signal.
According to a second aspect of the invention, a method operating a sanitary appliance is provided. The sanitary appliance herein comprises a receptacle provided with a flow surface and at least one outlet provided with a valve. The appliance further comprises a sensor comprising a resonant circuit and arranged in proximity to a sensing location at the flow surface. The method comprises the steps of:
- Sensing liquid flow by provision of a first voltage to the resonant circuit to be modified into a second voltage defining a sensing signal, and
- Controlling opening and/or closing of the valve on the basis of the sensing signal.

According to the invention, a sensor for liquid flow, and more particularly urine flow, is used to control opening and closing of a valve in an outlet of the receptacle. Sanitary appliances provided with such a valve at its outlet are for instance vacuum toilets, and substantially water-free toilets. In a further embodiment of the invention, the sanitary appliance may contain a separate container for urine that may be accessible via the valve. In again a further embodiment of the invention, the sanitary appliance may contain separate containers for urine and for solid waste. Such sanitary appliances attract attention so as to reduce the amount of water used for flushing a toilet. In many countries and regions, water availability is limited and may further reduce as a consequence of climate changes or may become more expensive. Using cleaned potable water for flushing of toilets is then uneconomical.

The use of a resonant circuit as a sensor is highly effective in that a sensing is provided which is less sensible for water, urine or dirt remaining at the flow surface, than a conventional sensor such as a capacitor. Moreover, a resonant circuit is able to distinguish urine from solid waste, if desired. This allows improvement of the operation of the toilet. For instance, as disclosed in WO2013/051817, when it is determined that the waste is solid, a pressure of water supplied by a water supplying unit may be controlled by the controller so that the water pressure in case of the solid waste is greater than that in case of urine.
Furthermore, it may be suitable to separate solid waste from urine. Urine may be reused as a raw material for fertilizer or other products. Moreover, urine is a major source of ammonium, phosphate and potassium in waste water that needs cleaning. Separation of urine from other faeces and any flushing water reduces such waste water problem and allows reuse. Moreover, separately collecting solid waste and urine may reduce odors, since humid material has a stronger odour than dry material. The use of a sensor comprising a resonant circuit allows distinguishing urine from water and solids. Furthermore, it may provide a sensor signal to a controller quickly, certainly in comparison to a capacitive sensor that becomes slow as a result of remaining liquid or dirt. The ability to provide a quick signal allows opening of the valve to a urine container without delays and a risk of mixing of urine, flushing water and any faeces. The signal transmission of the sensor is furthermore quick at flow surfaces that extend substantially horizontal and/or are just above the closing valve. At such locations, a thin layer of water or urine may remain. This thin layer already provides a connection between electrodes of the capacitive sensor. Hence the provision of more urine does not make a significant change. However, this will be detected with the sensor of the invention, based on detection of variations in the quality factor of particularly the inductor of the resonance circuit.

The resonant circuit is based on an inductance and a capacitance, which are suitably switched in parallel and coupled to ground. Preferably, the circuit comprises a planar inductor on a substrate, for instance having a surface area, including an inner aperture within a turn of the inductor of at least 1 cm², more preferably at least 3 cm². Such an inductor has both inductance and capacitance. The capacitance that varies as a function of the flow of urine or other liquid may further be enhanced by the addition of a further capacitor. Additional capacitors may be present so as to enable that the resonant circuit will have an appropriate resonance frequency at which it starts resonating. The effective impedance at the resonance frequency and close to the resonance frequency differs significantly. Changes in the resonance frequency due to the flow of urine therewith can be translated into consistent changes in impedance, and therewith to measurable variation in the output voltage.

The sensor suitably comprises an input circuit and an output circuit. The input circuit is particularly an input circuit for provision of a first voltage, which first voltage is modified into a second voltage dependent on a liquid flow. The first voltage is suitably provided by means of a voltage source with a digital port for the provision of the first voltage with a block wave shape, such as a microcontroller. However, use of alternating current is not excluded, as will be apparent to the skilled person. The input voltage is suitably pre-treated for optimization of the first voltage, so as to obtain an optimum output, i.e. a modified second voltage that is as large as feasible in view of the components in use. Particularly, the circuit is implemented so as to have a transformation ratio between the second voltage and the first voltage between 2 and 8, for instance between 2.5 and 5. A suitable implementation of the pre-treatment of the first voltage is a capacitive impedance transformation, as obtainable with a capacitive transformer circuit. The output circuit suitably comprises a rectifier. The resonance is particularly obtained by application of the first voltage as an alternating current. In a preferred implementation, the first voltage is provided with a symmetrical rectangular wave. This allows application of the first voltage by means of a digital port of a voltage source, for instance a microcontroller or a demultiplexer.

In one advantageous implementation, the voltage source, such as a microcontroller is provided with means for calibration of the excitation frequency. This is desired so that the excitation frequency is sufficiently close to the resonance frequency of the sensor when in a clean state. Such a calibration is desired not only because of manufacturing tolerances in the resonant circuit, but also in variations in the receptacle and in variations in the (perpendicular) distance of the resonant circuit to the flow surface. As an alternative or an additional option to calibration of the excitation frequency, use may be made of a calibration of the resonance circuit. Thereto an adjustable capacitor may be provided in the input circuit. One suitable implementation of such an adjustable capacitor is a switchable transistor or a varicap (varacter diode). An alternative implementation is a trimmable capacitor or capacitor network.

In order to obtain a maximum transfer of energy, the input circuit suitably comprises a resistance in series with the voltage source, so as to obtain a - transformed - source impedance that is substantially equal to a total resistance of the resonance circuit. This total resistance is equal to the resistance of any resistor components and the loss resistance. It will be clear to the skilled person that this resistance depends on the circuit topology of the resonance circuit, and how to calculate the representative value. A skilled person will therewith know what resistance to add to the design, so as to obtain a suitable transformed resistance. It is further clear that the added resistance depends on the inherent resistance of the voltage source. Typically, the voltage source has a small resistance, so that the transformed resistance is to be substantially equal to the said total resistance of the resonance circuit. Background hereof is the insight that maximum transfer of energy occurs if the impedance of the source and the load are complex complementary, i.e. the resistive components are equal in magnitude, while the reactive components are equal in magnitude, but opposite.

Particularly, by sensing in the area of resonance, a relative difference in sensed voltage between air and other media (such as urine and water) remains unaltered to a significant extent. For urine detection, the underlying idea is that a quality factor rather than a capacitance is to be determined. The quality factor is well known in the field of radio electronics as a measure of the ratio of the resonance frequency and the bandwidth (i.e. a 3dB band). The inventors have understood that any developed dirt layer will have an impact on the resonance frequency, but does normally not lead to a reduction in the quality factor. The quality factor is relatively insensitive to small variations in the capacitance and inductance but decreases as losses increase and can thus be used to identify urine flow at a particular location at the flow surface of the receptacle of the sanitary appliance. In a preferred embodiment, the first (input) voltage is applied with an èxcitation frequency that is relatively close to the area of resonance. For instance, it is within an area of less than 0.5 MHz difference to the resonance frequency as sensed initially without flow of urine, water or another cleaning liquid. More preferably the èxcitation frequency is lower than the resonance frequency. While the quality factor is conceptually the critical parameter, the effective sensing occurs on the basis of the second voltage. This is a signal that can be easily transformed and amplified to obtain a reliable detection. No necessity appears present to calculate the quality factor explicitly.

Most preferably, use is made of a plurality of sensors. This allows a differential sensing, so as to indicate a flow direction of urine or another fluid. It is typically beneficial to sense the sensors sequentially. Alternatively, the sensors could be sensed with overlapping timing. In one advantageous implementation, a first and a second sensor are arranged so that cross-talk occurs, also when these sensors are sensed sequentially. This is understood to be beneficial, since the output of the second sensor is amplified as a consequence of the cross-talk. Therewith an even better sensing is achieved. In this advantageous implementation, the first and the second sensor may be either provided on different substrates or on the same substrate. Alternatively, at least some of the plurality of sensors are distributed over the flow surface. One suitable advantage of such a configuration, is the ability to indicate an amount of urine flowing over the flow surface - the more and the longer that different sensors detect urine flow, the larger the volume. Moreover, more than one sensor may be suitable to present that urine flow is not detected. Such a need for a second and/or further sensor clearly depends on the location of the first sensor, as well as the design of the receptacle.

In again a further implementation, use is made of a first sensor and a second element that are mutually arranged above each other, more specifically such that upon perpendicular projection the first sensor and the second element overlap. The second element is for instance an inductor or a mass plate. If fluid and more particularly a salty and electrically conductive fluid such as urine is present between the first sensor and the second element, both elements will be coupled, resulting in a deviation of the second voltage. This deviation may then be used to detect blockage. It may be further used, for instance in the embodiment wherein urine is separately connected, that the reservoir for urine is full. The second element could for instance be arranged within a drain pipe, particularly when the first sensor is present within an annular ring circumferential to the outlet to the drain pipe. Alternatively, the second element may be provided in the valve, more particularly a laterally extending closure. The system is herein suitably configured such that a bottom side of such closure is only in contact with urine flow in case of an overflow. The second element is preferably floating, i.e. not coupled to a predefined voltage, especially when implemented in the said closure. However, the second element could be coupled to ground. When using a plurality of sensors, the output of a first sensor may be used as a reference value for a second sensor. However, alternatively or additionally, use may be made of a reference value taken from a memory. Such reference value may represent historical situation, for instance of a preceding sensing cycle, but also represent a calibrated value, i.e. a value in a situation of a clean flow surface. It will be understood that a plurality of comparisons with a plurality of reference values could be made. It will be further understood that a related value rather than the second voltage could be used, including a derivative of the second voltage over time, a response time and the like.

In a further embodiment, the one or more sensors in a receptacle are used for obtaining monitoring information. The quality parameter could be used for counting the number of users. Furthermore, because flow of cleaning liquid will provide another shift in resonance frequency than the urine flow, the urine flow may be distinguished from water flow. It can therewith be identified how often a receptacle is flushed, in comparison to how often it is used.

The monitoring may be expanded so as to tune operation of the sanitary appliance to the effective use, and also to reduce consumption of cleaning liquid, particularly flushing water. In one embodiment, a time is sensed at which the urine flow stops and a user terminates use of the receptacle. This result may be used to define a starting time for flushing. On the basis of historical information of frequency of use, an algorithm may be envisaged so as to optimize flushing. For instance, the flushing time may be set longer if the time lapsed since a previous usage was long. If many users make use of a sanitary appliance one after the other, the flushing time may well be shortened. Alternatively, flushing time may be shortened anyhow, but a flushing may be repeated in the event that a time span lapses before a subsequent user arrives. Furthermore, information on the location of urine flow within a receptacle, as obtained with a plurality of sensors, may be exploited so as to flush the receptacle (primarily) at a certain area of the sanitary appliance, rather than the complete surface area. Thereto, the sanitary appliance would be provided with a plurality of nozzles or the like, which can be opened or closed independently from each other.
Suitably, the sensor location is located in the vicinity of the outlet. In one preferred embodiment, the sensor location may be defined in an annular ring circumferential to the outlet. Rather than one sensor location, a plurality of sensor locations for a plurality of sensors may be present. The one or more sensors may be arranged in a complete ring, or alternatively in a portion of an annular ring, for instance a portion that is roughly U-shaped or roughly banana-shaped. Alternatively, the sensor may be roughly stripe-shaped. In such a U-shaped or stripe-shaped sensor configuration, turns of an inductor are preferably along the circumference of the shaped configuration, leaving a free area (i.e. without any turns) in the centre of the sensor configuration.

When present at a substrate or carrier, it is deemed preferably that the system controller is provided onto the same substrate, so as to minimize the need for wiring. The substrate may be provided with an encapsulation, for protection of any components assembled to the substrate. The inductor herein may be arranged at or on a side facing away from an assembly side of the substrate. In this manner, the inductor and any detecting capacitance, if present, may be facing towards the flow surface with minimum disturbance of any of the components assembled to the substrate.

The valve may be present in the receptacle, but could be alternatively arranged in a drain pipe connected to the receptacle. The valve may be provided with a hinge, so as to rotate for opening and closing. Alternatively, use can be made of a valve that is moved upwards or downwards relative to the outlet of the receptacle. In again a different implementation, the valve may be configured as a shutter. Actuators are suitably used for opening and/or closing. Such actuators may act in a single direction, while movement in the reverse direction is for instance effected by means of gravity. Alternatively, actuators may be provided for movement into both opposite directions. Preferably, the valve is configured such that it allows an effective closure between underlying pipe and/or containers and the receptacle. More preferably, the closure does not allow passing of vapours. If desired a first and a second valve may be used in series so as to create an intermediate isolating chamber. A water closet by means of a siphon may be present.

The sensor used in the invention is furthermore suitable for sensing a dirt layer at the flow surface. A dirt layer may be detected in that the excitation frequency is matched to the resonance frequency, after which a first voltage is applied. The second voltage is then determined as a function of time, and a time derivative is calculated. This time derivative has been understood by the inventors to constitute an effective parameter for the determination of the thickness of the dirt layer.
The determination of the thickness of a dirt layer, i.e. the amount of remaining urine and its strength after use of the sanitary appliance, allows flushing in an optimized volume and in accordance with advanced cleaning methods. For instance, monitoring is enabled to review whether a specific cleaning operation with soap or other cleaning means successfully cleans the sanitary appliance. Furthermore, monitoring the state of cleanness at a moment intermediate between subsequent usages, may be exploited to do a further cleaning operation, wherein for instance the cleaning liquid is a cleaning solution rather than pure water. In such a case flavours could be added to the cleaning liquid. Thereto, the sanitary appliance would be provided with a separate container for cleaning liquid and/or cleaning liquid concentrate. More generically, the use of cleaning liquid could be optimized to the needs in view of the state of "clean"-ness, so as to minimize water consumption and simultaneously to provide a sanitary appliance that meets the standards of hygiene and the expectations of users.

The sanitary appliance of the present invention may be a urinal aimed at male users. Alternatively, the sanitary appliance may be an ordinary lavatory bowl or a lavatory bowl of the types more regular in for instance France and Japan. The sanitary appliance may further be provided with an indicator defining a state of clean-ness of the receptacle and/or whether the sanitary appliance is ready for use. The indicator comprises suitable a light source, such as a LED, or any type of display. Alternatively, use could be made of a plurality of LEDs in different colours mimicking a traffic light.

For sake of clarity, it is added that the term 'flow surface' of a receptacle generally refers to the surface along which urine flow occurs. The term is used to encompass surfaces that are oriented obliquely, along which flow will occur due to gravity, but also surfaces that are oriented substantially horizontal, along which flow will occur due to the inflow of flowing liquid, such as water or urine. In comparison to prior art capacitive sensors, the sensors of the invention provide much better results on substantially horizontal portions of the flow surface, where often a thin layer of urine and/or water may be left after flushing. The risk of such remaining thin layer is clearly present in the event of a receptacle with a valve, and in the case of a sanitary appliance with flushing in a limited amount of even substantially without flushing.

### Brief introduction to the figures

These and other aspects of the invention will be further elucidated with reference to the figures, that are diagrammatical in nature and wherein:
Figure 1 shows a front view of an arrangement with two urinals;
Figure 2 shows a diagrammatical cross-sectional view of the arrangement of Fig. 1;
Figure 3 shows a circuit diagram of the sensor in one embodiment;
Figure 4 shows a circuit diagram of the sensor as used in a test
Figure 5 is a graph with curves measured on an oscilloscope in a test with the sensor circuit as shown in Fig. 4
Figure 6 and 7 are graphs of the variation of the output voltage (i.e. second voltage) as a function of time after successive urine flows, when operating the sensor in the film detection mode;
Fig. 8 is a graph of the variation of the second, output voltage and its derivative as a function of time upon successive applications of urine, when operating the sensor in the film detection mode;
Fig. 9 is a graph of the variation of the second, output voltage and its derivative as a function of time upon successive applications of a physiological solution, when operating the sensor in the urine detection mode;
Fig. 10 is a graph of the variation of the second, output voltage and its derivative as a function of time upon successive applications of urine, when operating the sensor in the urine detection mode;, and
Fig. 11 is a graph of the variation of the output voltage and its derivative as a function of time upon successive applications of tap water, when operating the sensor in the urine detection mode.;
Fig. 12 shows an alternative embodiment of the sanitary appliance in a diagrammatical cross-sectional view;
Fig. 13 shows again an alternative embodiment of the sanitary appliance in a diagrammatical cross-sectional view, and
Fig. 14(a)-(f) show in schematical top views various sensor configurations.

### Detailed description of illustrated embodiments

The figures are not drawn to scale. Equal reference numerals in different figures refer to equal or corresponding parts.

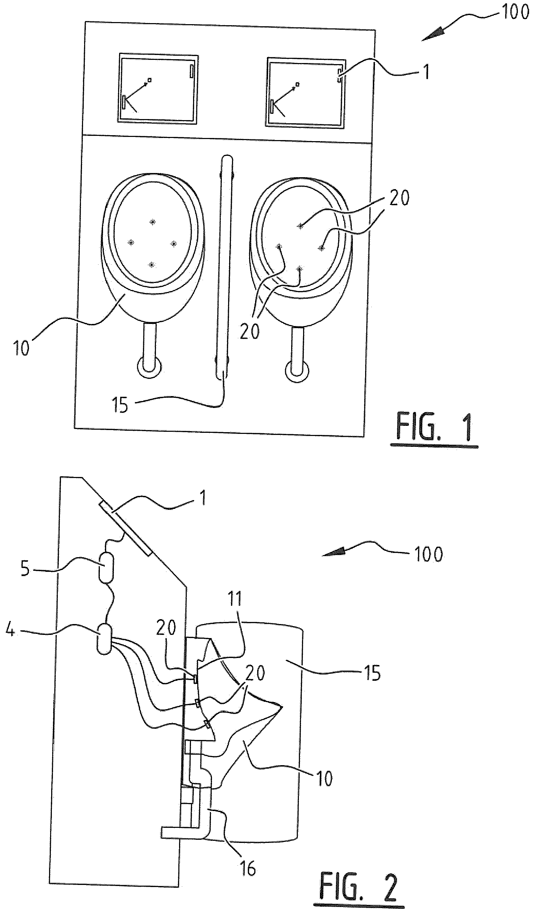

Fig. 1 shows a diagrammatical front view of a sanitary appliance 100 comprising a receptacle 10. The sanitary appliance 100 is further provided with sensors 20, and with a display 1. Actually, Fig. 1 shows two receptacles 10 with two displays 1 separated by a separation wall. For sake of simplicity, the complete arrangement is referred to as the sanitary appliance 100. However, it will be understood that typically a sanitary appliance comprises one receptacle.

Fig. 2 shows in a diagrammatical, cross-sectional view the sanitary appliance as shown in Fig. 1. The receptacle 10 is provided with a flow surface 11, and with a removal pipe 16. The sensors 20 are located in proximity to a sensing location at the flow surface 11. Typically, the sensors are arranged substantially parallel to the flow surface, so as to obtain a maximum sensing surface area. In this example, the sensors 20 are located at a rear side of the receptacle 10. Alternatively, the sensors 20 may be located in a cavity in the receptacle 10, more precisely in a cavity in the body thereof, which is accessible from the rear side. The sensors 20 may even be integrated into the receptacle's body, though this limits accessibility and may therefore be disadvantageous. For sake of clarity, the term 'rear side' as used herein, is used in a functional sense as the side of the receptacle at which no urine flow occurs. The exact location is open to further design, also dependent on the receptacle's shape, and could for instance be below, behind or sidewise of the flow surface. Fig. 1 shows four sensors per receptacle. This is merely an example. One sensor suffices in a basic embodiment of the invention. In an embodiment for sensing urine flow and/or a state of clean-ness at specific locations, the number of sensors is for instance from 2 to 10, while 3-6 appears a good engineering solution of appropriate sensing and acceptable cost level. The locations are evidently open to design. For instance, for a conventional toilet bowl, one or more sensors could be located behind a ring from which cleaning liquid is disposed.

Attachment of the sensor 20 to the receptacle 10 can be achieved in various ways, such as with labels, screws or other mechanical connection means as known in the art. The provision of the sensor in a cavity is considered to be advantageous for the present sensor for several reasons. First, the resonance circuit generally comprising an inductor and a capacitor is typically provided on a substrate. The dimensions of the substrate are sufficient so as to fit in a cavity of a size feasible with conventional fabrication technology of receptacles. Secondly, the provision of the sensor in a cavity may be implemented in combination with a locally thinned thickness of the constituent body of the receptacle 10. Such reduction of the thickness contributes to a good sensing. Thirdly, a cavity allows for standardization (i.e. prescription) of the exact location of the sensor. Fourth, clamping means may be easily implemented in a cavity. Such clamping means are desired so as to prevent that air layers of varying thickness are present between the sensor and the receptacle. Such an air layer may easily disturb the sensing. Fifth, a cavity appears to be a proper protection for the sensor during installation of a sanitary appliance. The cavity may be a virtually closed cavity, with merely a narrow aperture on one or two sides. Alternatively, the cavity may be an open cavity, i.e. a portion of the rear side's surface that is retracted so as to form a well-defined valley. Anything between such virtually closed and open cavity is also feasible. While the clamping is suitably combined with a cavity arrangement, the clamping may be implemented also in combination with other location arrangements for the sensor.

As shown in Figure 2, the sensor 20 is suitably coupled to an electronic circuit 4. This circuit is coupled to a processor unit 5 for driving a display 1. It appears suitable that the electronic circuit 4, which may comprise an input circuit and an output circuit, is implemented on said substrate as well. This appears suitable for an appropriate signal transmission to the processor unit 5. Such a connection to the processor unit 5 could be a wireless connection. However, a conventional cable connection over a bus, such as an I2C bus, is deemed more robust in the context of sanitary appliances. The cable connection may well be integrated into the body of the receptacle, for instance within dedicated channels therein. Alternatively, cable connection and processor unit 5 may be located outside of the receptacle 10, for instance in a separate box.

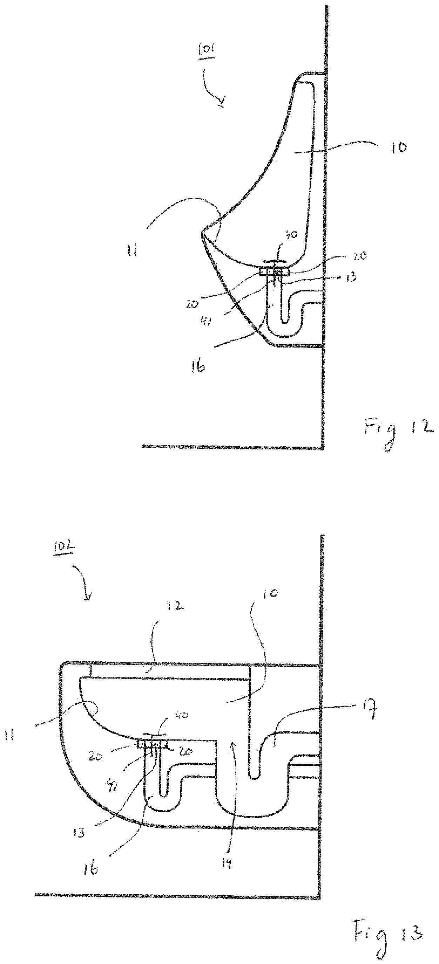

Fig. 12 shows an alternative version of a sanitary appliance 101 in diagrammatical cross-sectional view. This sanitary appliance 101 comprises a receptacle 10 with an outlet 13. A valve 40 is present at the outlet 13. In the implementation shown in this Figure 12, the valve 40 has a cover with a pin 41 entering into the removal pipe 16. The cover is suitably designed so as to achieve a good closure and is preferably provided with a rubber ring. The valve 40 with be actuated in known manner, particularly in interaction with the said pin 41. A controller - not shown - will provide driving signals to an actuator (not shown either).

The valve 40 of this sanitary appliance 101 is present so as to minimize odours leaving the removal pipe 16, notwithstanding the presence of a siphon within the removal pipe 16. Such odours particularly may occur if the flushing of the receptacle 10 is limited or even absent. It is to be closed when the appliance 101 is not used. More particularly, the valve 40 is to be opened only after that urine flow has started, to the comfort of a user, and to be closed as soon as the urine flow into the outlet 13 has terminated.

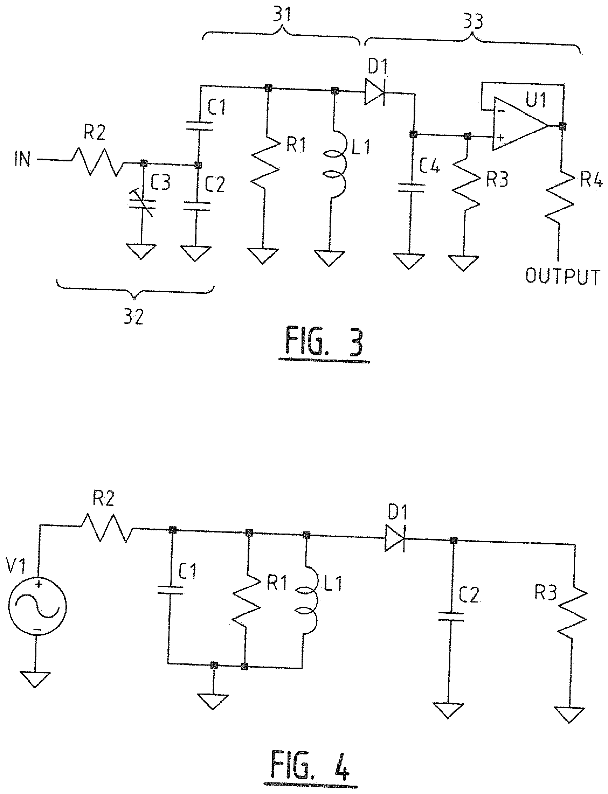

Sensors 20 are present in the vicinity of the outlet 13. They are present in an annular ring laterally around said outlet 13 in the implementation of Fig. 12. The vertical position may be somewhat shifted relative to the flow surface 11, in view thereof that the sensor 20 is preferably arranged at the rear side of the receptacle 10 or in a cavity thereof, as discussed hereinabove with reference to Fig. 1. With this sensor, which comprises a resonance circuit as further discussed with reference to Fig. 3 and 4, the start and termination of urine flow may be determined. The resonance circuit comprises an inductor with a suitable surface area. Capacitors are provided, so as to define the resonance frequency, and optionally to change in response to urine flow and/or the presence of a dirt layer.

Suitably, though not shown, further sensors may be present. It would be suitable to apply one or more additional sensors distributed at the flow surface. Such sensors may be beneficial to further reduce response time, in that the shown sensors are oriented substantially horizontal and in the vicinity of the outlet 13. Additional sensors may be provided at an inclined portion of the flow surface 11 and further away from the outlet 13. The urine flow will start slightly earlier on such alternatively location(s). Moreover, due to the inclined surface, where substantially no urine remains behind, the change in impedance may be larger than in the vicinity of the outlet, where a thin layer of urine might still be present.

However, additional sensors tend to make the solution more expensive, and may therefore be left out for economical reasons. In one preferred implementation, the sensor 20 is present on (or defined within) a substrate. This substrate may carry a further sensor. The further sensor could be arranged at a sufficient distance of the first sensor - to prevent crosstalk - or be sufficiently close to the first sensor, to make use of the crosstalk. Benefits of integrating both sensors on a single substrate are for instance a reduced assembly costs, and reduced component costs, by reuse of certain components such as a microcontroller and a battery for both sensors. The single substrate is for instance a printed circuit board, that is more suitably flexible. The inductor of the resonant circuit is herein suitably defined in a layer facing towards the flow surface 11. Further components may be assembled on a side of the substrate facing away from the flow surface. An encapsulant or other protection may further be provided for protection of such components against humidity, dust, other contamination (including some cleaning liquid).Fig. 13 shows again another version of the sanitary appliance 102 in a diagrammatical cross-sectional view. This appliance has a receptacle 10 in the form of a regular toilet, and is provided with a first outlet 13 and a second outlet 14. The first outlet 13 is in this example provided with a valve 40, while the second outlet is not provided with any valve so as to be selectively opened and closed. This appliance is designed so as to allow a separate removal of urine from other waste, such as solid waste and flushing water. This is deemed advantageous so as to collect the urine separately, for reuse rather than to transmit it to the sewerage. Moreover, it is further deemed advantageous for vacuum toilets.

Furthermore, such a separate collection of urine may be applied to significantly reduce the volume of flushing water without giving rise to odours. In fact, a conventional toilet is suitably provided with means to determine the amount of flushing water, and to reduce less flushing water if only urine is to be removed. However, such urine still enters the removal pipe and any water present in the siphon of the removal pipe and constituting an odour separation. This urine flow results in a mixture of urine and water, i.e. diluted urine, that needs to be removed. Therewith a minimum to the flushing volume is set. By means of separate collection of urine, this minimum may be further reduced. Not only can the drain pipe 16 for the urine flow have a smaller diameter than drain pipe 17, so as to reduce the volume of water in the siphon of the drain pipe 16. Furthermore, a valve 40 is present at the outlet 13 of the receptacle 10 to this drain pipe 16, providing an additional odour barrier. Hence, also if drain pipe 16 is connected to a sewerage, the volume of flushing water is still reduced significantly.

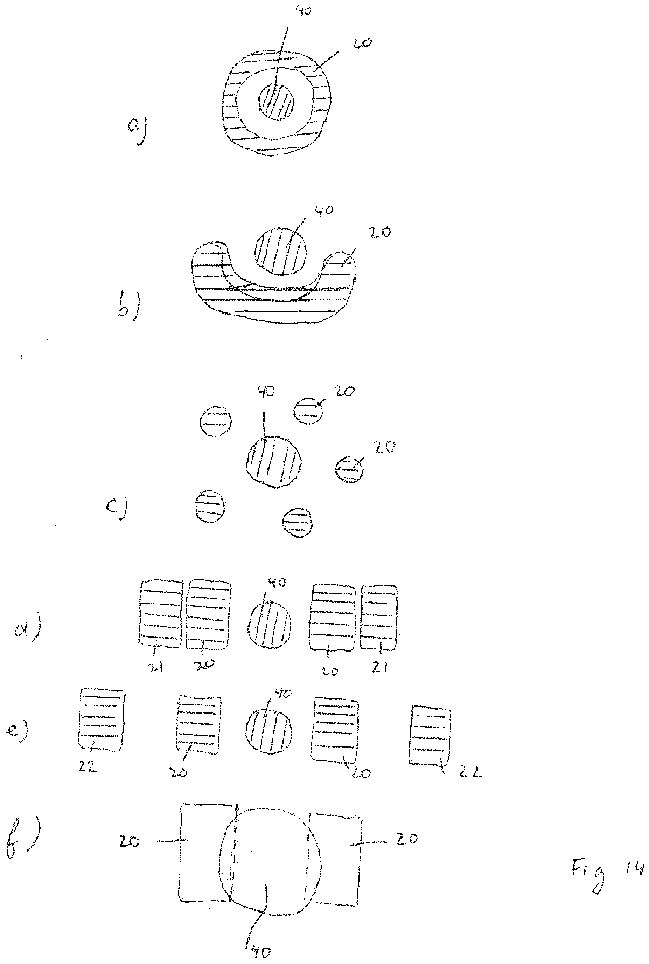

Fig. 14(a)-(f) shows in schematical top views various sensor configurations. The sensor 20 is in each case located in the vicinity of the valve 40. The sensor configurations indicate more particularly the outside shapes of the inductors of the sensor. Fig. 14(a) shows a sensor configuration, wherein the sensor 20 (i.e. the inductor outline) has the form of an annular ring. Suitably, a plurality of turns is present so as to fill up the shown area of the sensor 20.

Fig. 14(b) shows a sensor configuration, wherein the sensor area extends to a portion of an annular ring. The sensor area is for instance substantially in the shape of a banana cross-section. In this configuration, the sensor area suitably comprises a plurality of turns with a shape conformal to the outline of said sensor area. Most suitably, an inner area is left blank.

Fig. 14(c) shows a sensor configuration, wherein the annular ring is subdivided into a plurality of separate sensors. Five sensors are shown, each having a circular outline. This is purely diagrammatical, and variations or intermediates between the configurations of Fig. 14(b) and Fig. (c) are also feasible.

Fig. 14(d) shows a sensor configuration with sensors 20, 21 that are arranged adjacent to each other. The inductors are herein substantially rectangular, and preferably comprise a plurality of turns around an empty inner area. In order to optimize the sensing, it may be suitable that the substrate is removed from said inner area. It was found herewith that crosstalk between the inductors occurs and leads to signal amplification under urine flow. Hence, when urine flows first over sensor 21 and subsequently over sensor 20, the signal coming from sensor 20 is amplified.

Fig. 14(e) shows a sensor configuration with sensors 20, 22, that are arranged adjacent to each other, but such to prevent crosstalk. The distance between sensors 20 and 22 is suitably configured so that the orientation of the sensor 22 is different from that of sensor 20 (more particularly inclined and substantially horizontal).

Fig. 14(f) shows a sensor configuration wherein the sensors 20 overlap with the valve 40. This is feasible, since the sensors 20 are typically arranged at the rear side of the receptacle, whereas the valve is suitably present at the front side of the receptacle. Moreover, the valve 40 may have a larger diameter than an underlying outlet (not indicated). The valve 40 may be designed as an electrically conductive plate, or alternatively be provided with a plurality of turns along its outline. The intended operation is following: in an opened state, the valve will be provided at a sufficient distance from the flow surface 11. The urine flow will not get into contact with the valve. No coupling will occur with the inductors of the sensor. In a closed state, when properly working, the medium between the valve 40 and the inductors 20 will be the receptacle's body, typically a ceramic material. Some coupling may occur along the edges. In the closed state, with a blockage, urine will rise in the drain pipe. The electrically conductive urine may act as an extension of the valve. Therewith, the coupling will be increased, resulting in a deviation of the sensed voltage.

Fig. 3 shows a circuit diagram for a first embodiment of the sensor circuit 20. The sensor circuit comprises a resonance circuit 31, an input circuit 32 and an output circuit 33. The input circuit herein applies a pretreatment to an input voltage. Suitably, this input voltage originates from a microcontroller, so as to minimize use of components. However, a separate driver and/or a demultiplexer may be used if so desired. More preferably, the input voltage originates from a digital port of the microcontroller and is a symmetrical rectangular wave. In one example, the input voltage is a 5V supply voltage, having an amplitude of 2, 5 V.

Several functions are implemented in the input circuit 32; first, an impedance correction is applied, so that the resistive component of the driving source plus input circuit is substantially equal to the resistive component of the resonance circuit 31 after impedance transformation. This impedance correction is herein embodied with resistor R2. In a suitable embodiment of the resonance circuit 31, the (loss) resistance R1 will be preferably larger than 50 k . A second function is a capacitive impedance transformation. This is achieved with the capacitors C3 and C2. Because of the resistor R2, the peak voltage on the crossing C1/C2 + C3 would be 1.25 V, at an input voltage of 5V, in case of a sinusoidal voltage shape. As the amplitude of the first harmonic (this fundamental frequency is filtered by the tuned circuit) of a symmetrical rectangular wave is 4/ times larger, a peak voltage of 1.6 V is achieved at said crossing. This peak voltage is also referred to as the first voltage.

A third function resides in the adjustability of the capacitor C3. The value can be trimmed to calibrate the circuit. However, this is merely an option.
The exact implementation of the capacitors follows on the basis of boundary conditions of the output circuit 33 and the definition of the resonance circuit 31. Particularly, the rectifier (implemented as a diode D1) has a maximum voltage drop, for instance 0.6V and the operational amplifier U1 has a maximum common-mode voltage at its input, for instance in the range of 4-5V with a 5V supply voltage. As a result hereof, a transformation ratio may be determined between second voltage (i.e. voltage to the diode D1) and first voltage is for instance between 2 and 5, such as 3. Then, C2+C3 = 2*C1.

The resonance circuit 31 is suitably defined for a resonance frequency in the range of 3-12 MHz, more preferably between 6 and 9MHz. Such a resonance frequency is suitable, in that the excitation frequency applied with the first voltage may then be derived from the microcontroller without much transformation. Most suitably, use is made of one of the standard frequencies of a microcontroller. Moreover, use of a resonance frequency in the MHz range is suitable in terms of the penetration power, so as to reach through the receptacle's body, while it may be provided at relatively low voltages and currents, which are acceptable from safety and health perspectives.

The resonance frequency is preferably higher than the excitation frequency in the urine detection mode. More particularly, the difference between resonance frequency and excitation frequency is such that the excitation frequency corresponds to an increasing voltage so as to reach the maximum at the resonance frequency. A difference of at most 0.5 MHz, or at most 5% relative to the resonance frequency appears appropriate. Suitably, the difference is even smaller, for instance between 0.1 and 0.3 MHz, and even more suitably outside a -3dB range around the resonance frequency. The values for R1, L1 and C1 may then be calculated. L1 is for instance between 5 and 10 H. C1 is for instance between 30-80 pF. The loss resistance R1 is then preferably larger than 50 kΩ. This is further dependent on the exact implementation.

The output circuit 33 comprises several components for optimizing the signal so as to prepare a transmission to the processor, which may well be the microcontroller. A very large input resistance R3 is provided, for instance of at least 1 MΩ, such as 3 MΩ, so as to ensure a high input impedance for the amplifier U1 with a negligible loading of the tuned circuit. This U1 is more particularly a buffer stage which buffers the voltage over the resistance R3 to a low impedance for the subsequent connection. The resistance R4 ensures that a final stage of the operational amplifier should not provide high currents. This resistance R4 additionally attenuates the RF component of the excitation frequency on the connection. The diode D1 is used as a rectifier and the capacitor C2 flattens the second voltage.

Fig. 4 shows the circuit diagram of a corresponding circuit, which was used for testing purposes. It is however also a suitable alternative to the configuration of Fig. 3. The output circuit 33 is herein not optimized for transmission to a processor over a cable or printed connection, but for supply to an oscilloscope, or directly to a controller. R3 is herein the input impedance of the oscilloscope with a 10X attenuator, which is conventionally 10 MΩ. The input circuit 32 was limited to a resistor R2 ∼ R1 in view of the use of a sinusoidal voltage source acting. This was a so called function generator providing a voltage sweep from 7.8 to 8.6 MHz. Furthermore, a driving signal was provided as a trigger signal for the oscilloscope during the repeated supply of this voltage sweep.

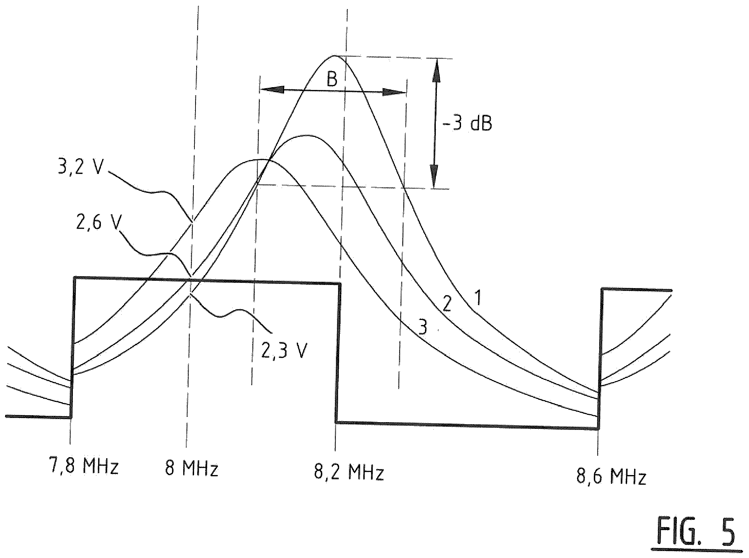

Fig. 5 shows the results in the form of a several graphs on an oscilloscope screen. The block shaped line being either high (from 7.8 to 8.2 MHz) or low (from 8.2 to 8.6 MHz) represents the said trigger signal. Three curves 1, 2, 3 are shown. Curve 1 shows the result in the event that no fluid flows at the flow surface. Curve 2 shows the result in the event that the fluid flow is tap water. Curve 3 shows the result in the event that a physiological salt solution flows at the flow surface. The physiological salt solution was a solution of 9 g NaCl per litre of water and represents urine. The flow surface was a polycarbonate plate. The sensor was attached to the rear side of this polycarbonate plate.

The resonance frequency of curve 1 was 8.18 MHz. The area B is a distance in frequency between the points at -3dB of the maximum signal at the resonance frequency. B was herein approximately 220 KHz. This corresponds to a quality factor of around 37. The voltage at the excitation frequency of 8 MHz was 2.3 V. This corresponds to half of the maximum amplitude.

The resonance frequency of curve 2 was 8.14 MHz. The quality factor is 32.5. The voltage amplitude at the excitation frequency of 8 MHz is 2.6V.

The resonance frequency of curve 3 was 8.08 MHz. The quality factor is 31. The voltage amplitude at the excitation frequency of 8 MHz is 3.2 V.

Measurements with urine rather than the physiological salt solution have shown that a film remaining on the flow surface of the receptacle after repeated use of a urinal leads to a shift in resonance frequency, due to the increase in capacitance. However, the Q-factor is nevertheless higher, than what would be expected on the basis of the shift in resonance frequency. This is understood to be due to the relative thicknesses of films resulting from urine flow and from salt solution flow. The thin film of urine residue causes less loss than a relatively thick layer of a salt solution.

It may be concluded from this test example that a clear distinction can be made between tap water and a physiological salt solution. Moreover, the relative difference in measured voltage remains relatively constant (unaffected), such that the sensitivity of the sensor will not change significantly in case of variation of the value of the capacitance and/or the inductance. Moreover, the measured voltages are sufficiently large to provide directly to an A/D converter of a microcontroller, in combination with an output circuit as discussed above.

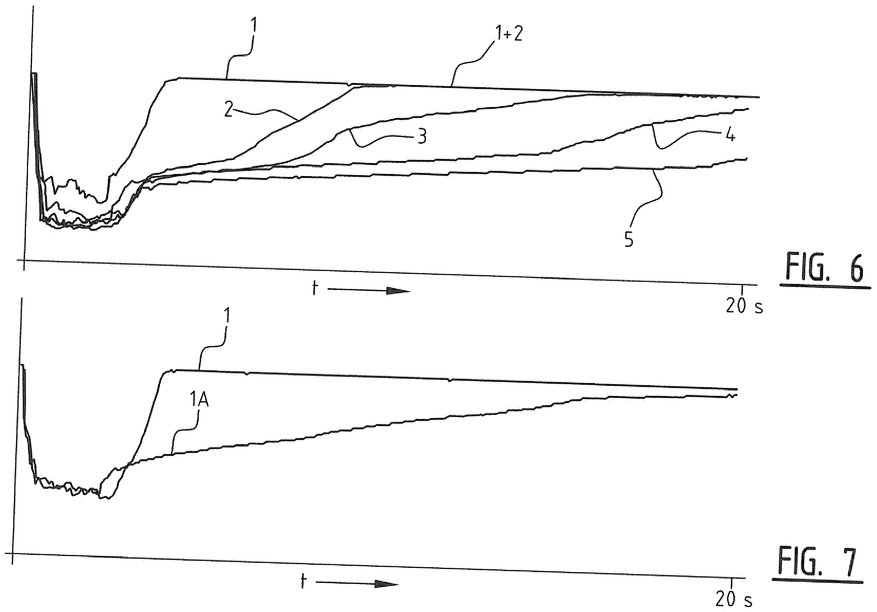

Fig. 6-8 show graphs that illustrate and explain the operation in the film detection mode of the sensor. Herein, the operating frequency has been tuned to be substantially identical to the resonance frequency of the receptacle with a clean and suitably dry surface. Any dirt film and urine flow has a significant effect on the second voltage: as a consequence thereof, the amplitude decreases, and the resonance frequency shifts to particularly lower frequencies. The sensed second voltage decreases as a consequence of both. However, in case of urine flow, the second voltage will return to its initial value corresponding to the situation with a clean surface.

Fig. 6 and 7 are graphs of a further experiment with urine flow. Fig. 6 shows herein the change of the second voltage (i.e. the output voltage) in the course of time for repeated urine flow on the flow surface of a receptacle. Curve 1 is obtained with a clean flow surface. Curve 2 shows the result after 10-fold usage. Curves 3, 4 and 5 show the results after 15-fold, 20-fold and 25-fold use. The curves show that the sensed capacity increases with film thickness in the film detection mode. It furthermore takes longer before the initial value is obtained again. This is due to the development of a layer of dirt of increasing thickness on the flow surface.

Fig. 7 shows two curves. Curve 1 corresponds to curve 1 in Fig. 6. Curve 1A was measured after providing tap water to the flow surface of the receptacle that was used 25 times. It is thus representative of a situation after flushing. It is apparent here from that the sensed capacity gradually returns to the initial value. The curve lies more or less between those for 10-15 times usage. However, the initial lowering corresponds again to the value as initially measured. In Fig. 6, the curves 2-5 have a lower minimum than curve 1. Also the shape of the curve 1A is different from that of curves 2-5. This result demonstrates that a distinction may be made between different situations at the flow surface of a receptacle.

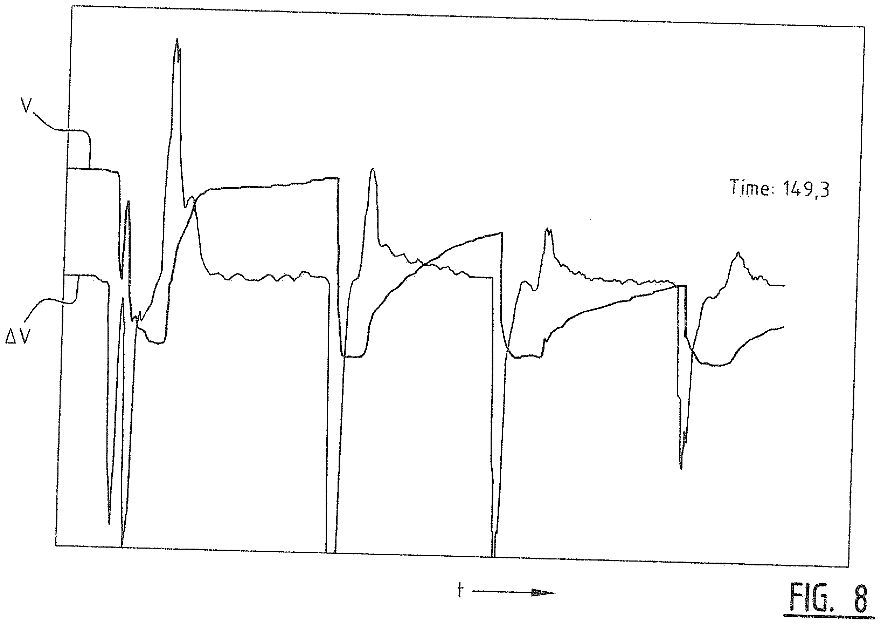

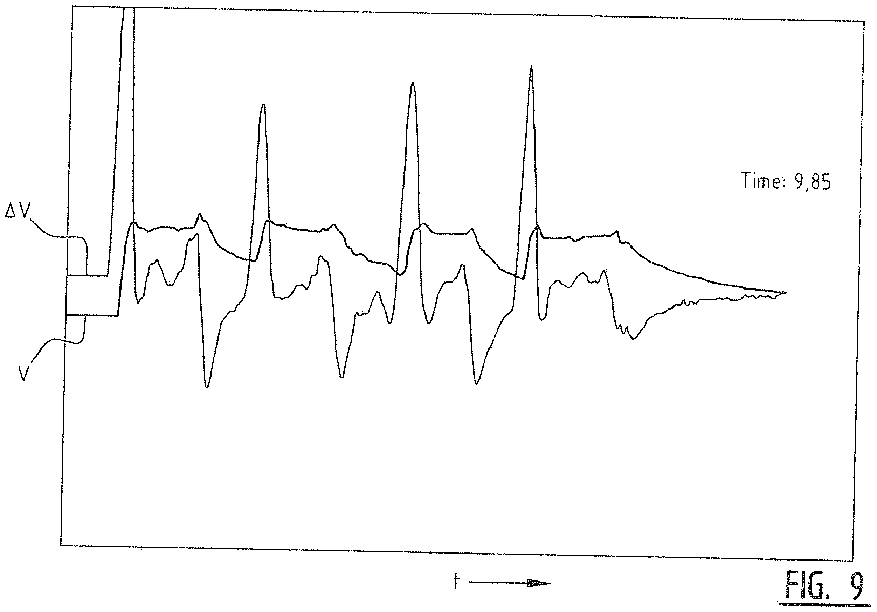

Fig. 8 is a graph showing results of an experiment with urine in the film detection mode. This graph includes a curve for the second voltage as a function of time, and a curve for the time derivative of the second voltage as a function of time. The result indicates four consecutive sensing cycles in which urine flow occurred and thereafter a sensing was done, without intermediate flow of cleaning liquid, i.e. an aqueous solution or simply tap water. The return of the second voltage after application of the first voltage is increasingly slow: the amplitude of the derivative decreases. The rise time of the output voltage while returning back to its initial value (but also the time-derivative), is a measure for the thickness of the urine residue film. Upon comparison with Fig. 9 and further, it becomes apparent that the voltage difference in Fig. 8 is larger. This is due to the operation of the resonance circuit, in the film detection mode, at the resonance frequency for the state in which the flow surface is clean.

Fig. 9-11 show graphs of various experiments in the urine detection mode. Each graph includes a curve showing the second voltage as a function of time, and a curve showing the time-derivative of the second voltage as a function of time. In the shown implementation of the urine detection mode, the operation or excitation frequency is lower than the resonance frequency. This results therein that the second voltage is higher during urine flow than for a clean and dry flow surface. The urine detection mode is shown here to operate for a single sensor.

Fig. 9 shows experiments with a physiological solution in the urine detection mode. Each flow of the solution results in a distinctive change of the sensor signal and its derivative.

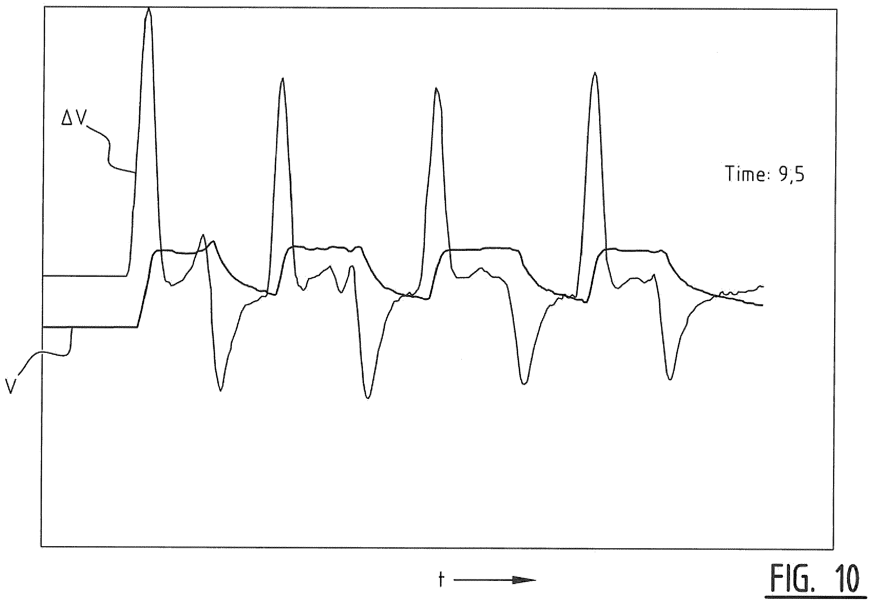

Fig. 10 shows experiments with urine in the urine detection mode. Each flow of urine results in a distinctive change of the sensor signal and its derivative.

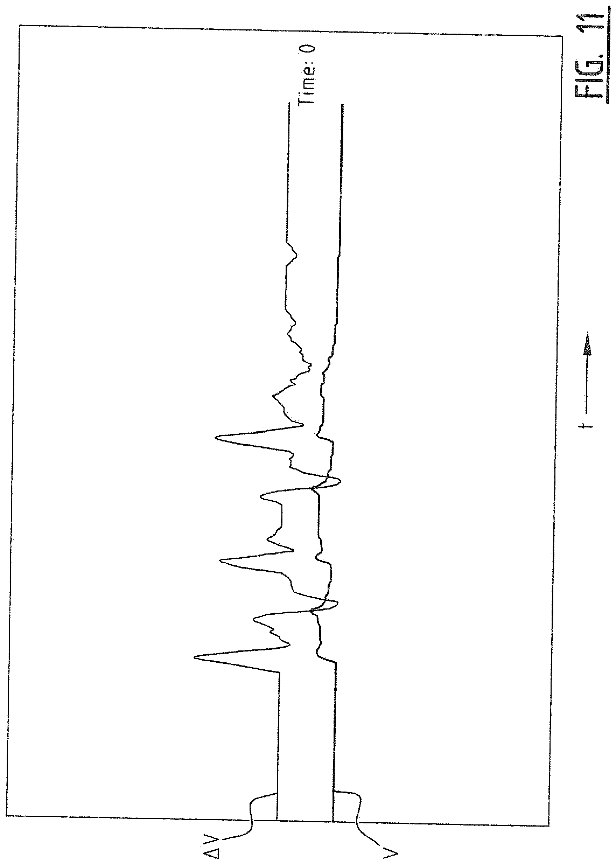

Fig. 11 shows experiments with tap water in the urine detection mode. It is clear that the output voltage and its derivative are substantially smaller than is the case in Fig. 9 (physiological solution). It is to be noted upon comparison of Figs. 9, 10 and 11 that the sensor signal (the second voltage) is highly similar in situations of a physiological solution and urine. Contrarily, thee signal and its derivative are markedly lower with tap water. This enables the software in the microcontroller to differentiate between clean water and solutions with a physiological salt content.

In summary, the invention provides a sanitary appliance with a sensor and an outlet provided with a valve. The sensor is used as an input to a controller so as to control the valve between a first state in which the valve is opened and a second state in which the valve is closed. Particularly, liquid flow on a flow surface of the receptacle of the appliance is sensed to detect flow of urine, and the valve is opened upon detection of urine. According to the invention, the sensor comprises a resonant circuit. Herein the inductor is configured in proximity and preferably substantially parallel to a flow surface, so as to enable sensing of variation of the inductance. This is measured as a variation of the impedance. More particularly, a first voltage is provided at an excitation frequency lower than a resonance frequency of the resonant circuit in a state of a clean flow surface. The sensor may further be used for detecting of a dirt layer. This can be used in a single protocol in combination with the detection of urine flow. Therewith an optimized flushing and/or cleaning protocol becomes feasible.

It is observed for clarity and completeness, that a start of urination may be calculated, on the basis of the sensing in the urine detection mode, by means of a time-derivative of the second voltage.

## Claims

1. Sanitary appliance (101, 102) comprising:
- a receptacle (10) provided with a flow surface (11) and at least one outlet (13) provided with a valve (40),
- a sensor (20, 21, 22) for sensing liquid flow at a sensing location of the flow surface (11), which sensor (20, 21, 22) is arranged in proximity to said sensing location,
- a controller for receiving a sensor signal and controlling opening and/or closing the valve (40) on the basis of the sensor signal,
wherein the sensor (20, 21, 22) comprises a resonant circuit (31).

2. The sanitary appliance (101, 102) as claimed in claim 1, wherein the resonant circuit (31) is provided with a resonance frequency shifting in dependence of liquid flow, and the sensor (20, 21, 22) is configured as an impedance of which a magnitude varies in dependence of said resonance frequency shifting.

3. The sanitary appliance (101, 102) as claimed in Claim 1, wherein the sensing location is adjacent to the outlet (13).

4. The sanitary appliance (101, 102) as claimed in any of the preceding Claims, wherein the resonant circuit (31) comprises an inductor that is configured to have a plurality of turns and that is in a shape of an annular ring circumferential to the outlet (13), or in a shape of a portion of such an annular ring.

5. The sanitary appliance (101, 102) as claimed in any of the preceding claims, wherein a first and a second sensor (20, 21, 22) are present, each comprising a resonant circuit (31) with an inductor, which sensors (20, 21, 22) are mutually arranged so as to enable crosstalk between the inductors of the resonant circuits (31).

6. The sanitary appliance (101, 102) as claimed in any of the preceding claims, wherein the resonant circuit (31) is a parallel resonant circuit coupled to ground.

7. Sanitary appliance (101, 102) as claimed in any of the preceding claims, wherein the sensor (20, 21, 22) is present on a substrate that is arranged substantially parallel to the flow surface (11).

8. Sanitary appliance (101) as claimed in any of the preceding claims, wherein the appliance (101) is a substantially water-free appliance.

9. Sanitary appliance (102) as claimed in any of the preceding claims, wherein the receptacle (10) is provided with a first outlet (13) and a second outlet (14), wherein the first outlet (13) is connected to a reservoir for urine and the second outlet (14) is connected to reservoir or pipe (17) for other composition.

10. Sanitary appliance (101, 102) as claimed in any of the preceding claims, wherein the sensor (20, 21,22) is further provided with an input circuit (32) for provision of a first voltage, which first voltage is modified into a second voltage dependent on a liquid flow.

11. Sanitary appliance (101, 102) as claimed in Claim 10, wherein a voltage source is configured for provision of the first voltage at an excitation frequency near or on a resonance frequency of the resonant circuit (31).

12. Sanitary appliance (101, 102) as claimed in Claim 11, wherein the voltage source is further provided with calibration means for calibration of the excitation frequency.

13. Sanitary appliance (101, 102) as claimed in claims 10-12, wherein the input circuit (32) is configured for a transformation ratio between the second and the first voltage in the range of 2 to 8, preferably between 2.5 and 5.

14. Sanitary appliance (101, 102) as claimed in any of the preceding claims, wherein the resonance circuit (31) is configured for a resonance frequency in the range of 3-12 MHz, preferably 6-9 MHz.

15. A method of operating a sanitary appliance (101, 102) provided with a receptacle (10) provided with a flow surface (11) and at least one outlet (13) provided with a valve (40), and a sensor (20, 21, 22) comprising a resonant circuit (31) and arranged in proximity to a sensing location at the flow surface (11), said method comprising the steps of:
- Sensing liquid flow by provision of a first voltage to the resonant circuit (31) to be modified into a second voltage defining a sensing signal, and
- Controlling opening and/or closing of the valve (40) on the basis of the sensing signal.

## Patentansprüche

1. Sanitärvorrichtung (101, 102), die aufweist:
- ein Gefäß (10), das mit einer Fließoberfläche (11) und wenigstens einem Ablauf (13), der mit einem Ventil (40) versehen ist, versehen ist,
- einen Sensor (20, 21, 22) zum Abtasten eines Flüssigkeitsflusses an einer Abtaststelle der Fließoberfläche (11), wobei der Sensor (20, 21, 22) nahe der Abtaststelle angeordnet ist,
- eine Steuerung zum Empfangen eines Sensorsignals und Steuern des Öffnens und/oder Schließens des Ventils (40) auf der Basis des Sensorsignals,
wobei der Sensor (20, 21, 22) eine Resonanzschaltung (31) aufweist.

2. Sanitärvorrichtung (101, 102) nach Anspruch 1, wobei die Resonanzschaltung (31) mit einer Resonanzfrequenzverschiebung in Abhängigkeit von dem Flüssigkeitsfluss versehen ist, und wobei der Sensor (20, 21, 22) als eine Impedanz konfiguriert ist, deren Größe sich in Abhängigkeit von der Resonanzfrequenzverschiebung ändert.

3. Sanitärvorrichtung (101, 102) nach Anspruch 1, wobei die Abtaststelle benachbart zu dem Ablauf (13) ist.

4. Sanitärvorrichtung (101, 102) nach einem der vorhergehenden Ansprüche, wobei die Resonanzschaltung (31) einen Induktor aufweist, die derart konfiguriert ist, dass er mehrere Windungen hat, und der die Form eines den Ablauf (13) umlaufenden ringförmigen Rings oder die Form eines Abschnitts eines derartigen ringförmigen Rings hat.

5. Sanitärvorrichtung (101, 102) nach einem der vorhergehenden Ansprüche, wobei ein erster und ein zweiter Sensor (20, 21, 22) vorhanden sind, wobei jeder eine Resonanzschaltung (31) mit einem Induktor aufweist, wobei die Sensoren (20, 21, 22) wechselseitig derart angeordnet sind, dass sie Nebensprechen zwischen Induktoren der Resonanzschaltungen (31) ermöglichen.

6. Sanitärvorrichtung (101, 102) nach einem der vorhergehenden Ansprüche, wobei die Resonanzschaltung (31) eine mit Masse verbundene parallele Resonanzschaltung ist.

7. Sanitärvorrichtung (101, 102) nach einem der vorhergehenden Ansprüche, wobei der Sensor (20, 21, 22) auf einem Substrat vorhanden ist, das im Wesentlichen parallel zu der Fließoberfläche (11) angeordnet ist.

8. Sanitärvorrichtung (101) nach einem der vorhergehenden Ansprüche, wobei die Vorrichtung (101) eine im Wesentlichen wasserfreie Vorrichtung ist.

9. Sanitärvorrichtung (102) nach einem der vorhergehenden Ansprüche, wobei das Gefäß (10) mit einem ersten Ablauf (13) und einem zweiten Ablauf (14) versehen ist, wobei der erste Ablauf (13) mit einem Behälter für Urin verbunden ist und der zweite Ablauf (14) mit einem Behälter oder einer Leitung für eine andere Zusammensetzung verbunden ist.

10. Sanitärvorrichtung (101, 102) nach einem der vorhergehenden Ansprüche, wobei der Sensor (20, 21, 22) ferner mit einer Eingangsschaltung (32) für die Bereitstellung einer ersten Spannung versehen ist, wobei die Spannung in Abhängigkeit von einem Flüssigkeitsfluss in eine zweite Spannung modifiziert wird.

11. Sanitärvorrichtung (101, 102) nach Anspruch 10, wobei eine Spannungsquelle für die Bereitstellung der ersten Spannung mit einer Anregungsfrequenz nahe oder bei einer Resonanzfrequenz der Resonanzschaltung (31) konfiguriert ist.

12. Sanitärvorrichtung (101, 102) nach Anspruch 11, wobei die Spannungsquelle ferner mit einer Eicheinrichtung zur Eichung der Anregungsfrequenz versehen ist.

13. Sanitärvorrichtung (101, 102) nach den Ansprüchen 10 - 12, wobei die Eingangsschaltung (32) für ein Transformationsverhältnis zwischen der zweiten und der ersten Spannung im Bereich von 2 bis 8, vorzugsweise zwischen 2,5 und 5, konfiguriert ist.

14. Sanitärvorrichtung (101, 102) nach einem der vorhergehenden Ansprüche, wobei die Resonanzschaltung (31) für eine Resonanzfrequenz im Bereich von 3 - 12 MHz, vorzugsweise 6 - 9 MHz, konfiguriert ist.

15. Verfahren zum Betreiben einer Sanitärvorrichtung (101, 102), die versehen ist mit: einem Gefäß (10), das mit einer Fließoberfläche (11) und wenigstens einem Ablauf (13), der mit einem Ventil (40) versehen ist, versehen ist, und einem Sensor (20, 21, 22), der eine Resonanzschaltung (31) aufweist, der nahe einer Abtaststelle an der Fließoberfläche (11) angeordnet ist, wobei das Verfahren die folgenden Schritte aufweist:
- Abtasten eines Flüssigkeitsflusses durch die Bereitstellung einer ersten Spannung an die Resonanzschaltung (31), die in eine zweite Spannung, welche ein Abtastsignal definiert, modifiziert werden soll, und
- Steuern des Öffnens und/oder Schließens des Ventils (40) auf der Basis des Abtastsignals.

## Revendications

1. Appareil sanitaire (101 ,102) comprenant :
- un récipient (10) pourvu d'une surface d'écoulement (11) et d'au moins une sortie (13) pourvue d'une vanne (40),
- un capteur (20, 21, 22) pour détecter un écoulement de liquide à un emplacement de détection de la surface d'écoulement (11), lequel capteur (20, 21, 22) est agencé à proximité dudit emplacement de détection ;
- un dispositif de commande pour recevoir un signal de capteur et commander l'ouverture et/ou la fermeture de la vanne (40) sur la base du signal de capteur,
dans lequel le capteur (20, 21, 22) comprend un circuit résonnant (31).

2. Appareil sanitaire (101, 102) selon la revendication 1, dans lequel le circuit résonnant (31) est pourvu d'un décalage de fréquence de résonance en fonction d'un écoulement de liquide, et le capteur (20, 21, 22) est configuré comme une impédance dont une grandeur varie en fonction dudit décalage de fréquence de résonance.

3. Appareil sanitaire (101, 102) selon la revendication 1, dans lequel l'emplacement de détection est adjacent à la sortie (13).

4. Appareil sanitaire (101, 102) selon l'une quelconque des revendications précédentes, dans lequel le circuit résonnant (31) comprend une inductance qui est configurée pour avoir une pluralité de spires et qui est sous la forme d'un anneau annulaire circonférentiel à la sortie (13), ou sous la forme d'une partie d'un tel anneau annulaire.

5. Appareil sanitaire (101, 102) selon l'une quelconque des revendications précédentes, dans lequel un premier et un second capteur (20, 21, 22) sont présents, comprenant chacun un circuit résonnant (31) ayant une inductance, lesquels capteurs (20, 21, 22) sont agencés mutuellement de manière à permettre une diaphonie entre les inductances des circuits résonnants (31).

6. Appareil sanitaire (101, 102) selon l'une quelconque des revendications précédentes, dans lequel le circuit résonnant (31) est un circuit résonnant parallèle couplé à la terre.

7. Appareil sanitaire (101, 102) selon l'une quelconque des revendications précédentes, dans lequel le capteur (20, 21, 22) est présent sur un substrat qui est agencé sensiblement parallèlement à la surface d'écoulement (11).

8. Appareil sanitaire (101) selon l'une quelconque des revendications précédentes, dans lequel l'appareil (101) est un appareil sensiblement exempt d'eau.

9. Appareil sanitaire (102) selon l'une quelconque des revendications précédentes, dans lequel le récipient (10) est pourvu d'une première sortie (13) et d'une seconde sortie (14), dans lequel la première sortie (13) est connectée à un réservoir pour urine et la seconde sortie (14) est connectée à un réservoir ou un tuyau (17) pour une autre composition.

10. Appareil sanitaire (101, 102) selon l'une quelconque des revendications précédentes, dans lequel le capteur (20, 21, 22) est pourvu en outre d'un circuit d'entrée (32) pour fournir une première tension, laquelle première tension est modifiée en une seconde tension en fonction d'un écoulement de liquide.

11. Appareil sanitaire (101, 102) selon la revendication 10, dans lequel une source de tension est configurée pour fournir la première tension à une fréquence d'excitation proche d'une ou sur une fréquence de résonance du circuit résonnant (31).

12. Appareil sanitaire (101, 102) selon la revendication 11, dans lequel la source de tension est pourvue en outre d'un moyen d'étalonnage pour l'étalonnage de la fréquence d'excitation.

13. Appareil sanitaire (101, 102) selon les revendications 10 à 12, dans lequel le circuit d'entrée (32) est configuré pour un rapport de transformation entre la seconde et la première tension dans la plage de 2 à 8, de préférence entre 2,5 et 5.

14. Appareil sanitaire (101, 102) selon l'une quelconque des revendications précédentes, dans lequel le circuit de résonance (31) est configuré pour une fréquence de résonance dans la plage de 3 à 12 MHz, de préférence de 6 à 9 MHz.

15. Procédé de fonctionnement d'un appareil sanitaire (101, 102) pourvu d'un récipient (10) pourvu d'une surface d'écoulement (11) et d'au moins une sortie (13) pourvue d'une vanne (40), et d'un capteur (20, 21, 22) comprenant un circuit résonnant (31) et agencé à proximité d'un emplacement de détection à la surface d'écoulement (11), ledit procédé comprenant les étapes suivantes :
- la détection d'un écoulement de liquide par la fourniture d'une première tension au circuit résonnant (31) à modifier en une seconde tension définissant un signal de détection, et
- la commande de l'ouverture et/ou de la fermeture de la vanne (40) sur la base du signal de détection.
